# FASCICULE DE BREVET EUROPEEN

(11) **EP 0 477 071 B1**
(45) Date de publication et mention de la délivrance du brevet: **06.12.1995**
(21) Numéro de dépôt: 91402435.1
(22) Date de dépôt: 13.09.1991
(51) Int. Cl.: H04N 5/232

(54) **Dispositif d'assistance à la mise au point optique d'une caméra de télévision, et caméra munie d'un tel dispositif**
Gerät zur Unterstützung der optischen Fokussierung einer Fernsehkamera und Kamera mit einer derartigen Vorrichtung
Optical focalisation assisting device for a video camera and camera with such a device

(30) Priorité: 19.09.1990 FR 9011553
(43) Date de publication de la demande: 25.03.1992
(73) Titulaire: THOMSON BROADCAST, 95801 Cergy-Saint-Christophe (FR)
(72) Inventeur: Delmas, Francis, F-92045 Paris la Défense (FR)
(74) Mandataire: Ruellan-Lemonnier, Brigitte

(56) Documents cités:
- US-A- 4 463 384
- US-A- 4 794 459
- PATENT ABSTRACTS OF JAPAN, vol. 14, no. 425 (E-977)[4368], 13 septembre 1990; & JP-A-2 162 973
- PATENT ABSTRACTS OF JAPAN, vol. 7, no. 27 (E-156)[1172], 3 février 1983; & JP-A-57 183 186

## Description

L'invention se rapporte au domaine de la télévision et a plus particulièrement pour objet un dispositif d'assistance à la mise au point optique d'une caméra de télévision et une caméra munie d'un tel dispositif.

La "mise au point", ou focalisation optique, d'une caméra de télévision, se fait par le réglage de "focus" de l'objectif monté sur la caméra.

Ce réglage est à la disposition du cadreur qui 'fait le point" en contrôlant la finesse de son image sur un petit moniteur de télévision fixé sur la caméra, appelé viseur, et qui, de plus, effectue le cadrage selon les directives du réalisateur.

La mise au point de l'image est donc confiée au cadreur avec, pour seul contrôle l'image du viseur.

La précision de la mise au point dépend donc de la finesse et de la taille du viseur et interdit pratiquement l'utilisation d'un viseur couleur de résolution inférieure à celle des viseurs Noir et Blanc.

En télévision haute définition, la définition de l'image est doublée en vertical et en horizontal par rapport à la définition de l'image classique. La précision demandée au cadreur pour la focalisation de l'image doit donc être quatre fois plus grande.

La dimension limitée des viseurs que l'on peut installer sur une caméra ne permet pas toujours d'obtenir cette précision accrue. Il est donc fréquent de voir des images haute définition non focalisées à l'optimum, ce qui est préjudiciable à la promotion de ce standard.

Sur certaines caméras haute définition, des constructeurs ont introduit une télécommande de la focalisation sur le pupitre de l'ingénieur vision qui dispose, lui, d'un moniteur de contrôle de résolution supérieur à celle du viseur. Mais l'ingénieur vision n'a pas la notion artistique du cadreur et ne sait pas forcément où faire le point.

En outre, ce système est inutilisable dans le cas très fréquent dune exploitation multi-caméras : un seul ingénieur vision ne peut contrôler la focalisation sur plusieurs caméras en même temps.

Le document US-A-4 794 459 décrit un dispositif qui sépare les composantes hautes fréquences du signal vidéo et génère un signal de commande en courant continu dont le niveau est censé être représentatif des composantes hautes fréquences du signal vidéo. Le signal de commande en courant continu est ensuite accumulé pour génèrer un autre courant continu de niveau prédéterminé qui est visualisé par une ligne horizontale de transition entre une zone brillante et une zone sombre dans la colonne.

L'invention a pour objet un dispositif d'assistance à la mise au point optique d'une caméra de télévision, notamment haute définition, qui permet de résoudre ce problème en apportant une aide supplémentaire au cadreur pour la mise au point de son image à partir d'un critère technique objectif et de moyens de traduction, facilement exploitables, de ce critère dans le viseur.

Selon l'invention un dispositif d'assistance à la mise au point optique d'une caméra de télévision comportant un objectif à focalisation réglable par une manette de mise au point, des circuits électroniques de traitement pour l'obtention d'un signal vidéo, et un viseur pour contrôler l'image en cours de prise de vue, à partir du signal vidéo, est caractérisé en ce qu'il comporte :
- un circuit d'extraction de contours qui extrait du signal vidéo un signal de contours correspondant à la dérivée seconde du signal vidéo et dont l'amplitude varie avec le défaut de mise au point de l'objectif,
- un générateur de marqueur, couplé au circuit d'extraction de contours pour générer, à partir du signal de contours, un signal caractérisant l'image d'un marqueur dont la position dans le viseur varie le long d'un axe en fonction de l'amplitude du signal de contours ;
- et un circuit de combinaison dont les entrées sont reliées à la sortie de signal vidéo d'une part et à la sortie du générateur de marqueur d'autre part, et dont la sortie est reliée à l'entrée de signal du viseur, pour inscrire le marqueur dans l'image de contrôle.

L'invention a également pour objet une caméra de télévision munie d'un tel dispositif d'assistance.

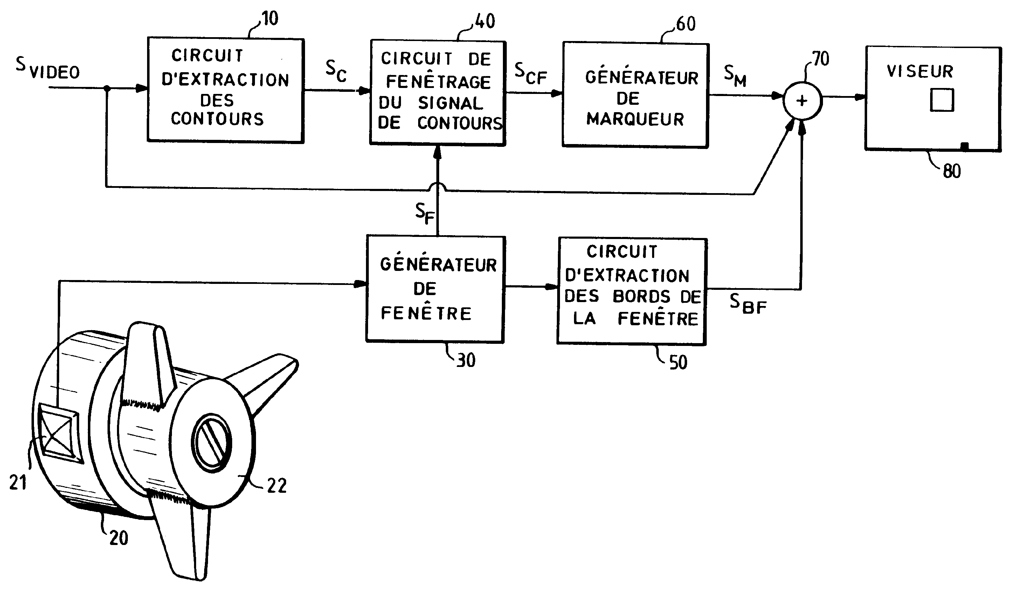

L'invention sera mieux comprise et d'autres caractéristiques apparaîtront à l'aide de la description qui suit en référence à la figure unique annexée qui représente le schéma synoptique du dispositif d'assistance à la mise au point selon l'invention.

L'invention utilise le fait que lorsqu'une image est nette, les transitions électroniques du signal vidéo sont les plus courtes possibles. Les dérivées premières et seconde de ce signal sont donc les plus grandes possibles. La dérivée seconde du signal vidéo est en fait le signal de contour brut et ce signal de contour peut être prélevé dans les circuits vidéo électroniques. Le dispositif d'assistance à la mise au point optique va apporter au cadreur un moyen d'appréciation simple de l'amplitude de ce signal de contour, en la traduisant par une position associée d'un repère. Pour cela le dispositif d'assistance fait apparaître un marqueur visible dans l'image du cadreur, dont la position asservie dépend de l'amplitude du signal de contour. Ce marqueur donne donc une indication visuelle de la focalisation à partir d'un critère technique objectif.

En général, le cadreur peut choisir la zone de l'image dans laquelle il veut faire la mise au point. Pour cela une fenêtre est également visualisée, dont la position est fixée dans l'image à l'aide d'une commande de déplacement disposée sur la manette de mise au point.

Donc, une fois la zone de mise au point choisie et matérialisée par la fenêtre, le cadreur agit sur la commande de mise au point, de façon à positionner le marqueur dans la position associée à la meilleure focalisation.

La figure unique est un schéma synoptique du dispositif d'assistance à la mise au point d'une caméra de télévision. Il comporte un circuit d'extraction, 10, du signal de contours S_{c} d'un signal vidéo Svidéo et une poignée de mise au point de la caméra, 20, munie d'une manette 22 pour la commande de la mise au point et d'une commande "TRIM" 21 de déplacement 'une fenêtre dans l'image. Cette commande, "TRIM", a la forme d'une pyramide et peut être actionnée par le pouce de la main dans les 4 directions Haut, Bas, Droite, Gauche.

Un générateur de fenêtre 30 traduit les déplacements commandés par la commande "TRIM" sous la forme d'un signal de fenêtre SF appliqué à l'entrée de commande d'un circuit de fenêtrage 40 du signal de contours S_{c} appliqué à son entrée de signal. Le générateur de fenêtre 30 commande également un circuit d'extraction 50, des bords de la fenêtre, en vue d'insérer une représentation de cette fenêtre dans l'image formée dans le viseur. Le circuit de fenêtrage du signal de contour 40, fournit le signal de contours dans la fenêtre sélectionnée S_{CF} et ce signal est appliqué à un circuit générateur de marqueur, 60. Ce circuit traduit l'amplitude moyenne du signal de contours dans la fenêtre par un marqueur. Le marqueur est par exemple un petit carré noir ou blanc, dont la position sur un axe horizontal en bas de l'image est asservie à l'amplitude moyenne du signal de contour dans la fenêtre S_{CF}.

Un circuit de combinaison 70 élabore alors le signal vidéo appliqué au viseur en superposant au signal vidéo d'entrée Svidéo le signal caractéristique du marqueur S_{M} et le signal SBF caractéristique des bords de la fenêtre. L'image vue par le cadreur dans le viseur 80 résulte de la superposition de ces trois signaux.

Les différents traitements effectués à partir du signal vidéo, et le détail des circuits correspondants sont à la portée de l'homme de l'art et ne sont donc pas détaillés dans la présente description.

L'invention n'est pas limitée au mode de réalisation décrit ci-dessus. En particulier une zone de mise au point a été définie par une fenêtre et le positionnement de cette fenêtre est prévu dans l'image qui apparaît dans le viseur : il est également possible de considérer l'ensemble de l'image pour la mise au point et d'établir le critère technique de la mise au point à partir du signal de contours de l'ensemble de l'image. Dans ce cas, il n'est évidemment pas utile de mettre en oeuvre un générateur de fenêtre ni d'extraire les bords de la fenêtre pour les afficher dans le viseur.

De plus, dans le mode de réalisation décrit, l'axe sur lequel est déplacé le marqueur est un axe horizontal en bas de l'image. Il est tout à fait possible que cet axe soit situé dans le haut de l'image ou que cet axe soit un axe vertical, à droite ou à gauche de l'image. Le marqueur peut également avoir une forme différente, trait par exemple et l'axe peut être matérialisé par un trait, l'axe et le trait marqueur étant orthogonaux.

Le dispositif d'assistance à la mise au point optique selon l'invention apporte à l'utilisateur un certain nombre d'avantages :
- le cadreur conserve sa fonction de cadrage et de mise au point de la caméra ;
- la mise au point n'est plus dépendante de la taille du viseur ;
- la solution autorise l'emploi d'un viseur couleur de moindre résolution que les viseurs en noir et blanc ;
- la télécommande de focalisation à partir d'un pupitre éloigné de la caméra n'est plus utile ;
- la solution est applicable à toutes les caméras de télévision, particulièrement aux caméras de télévision haute définition où elle est très utile, mais également aux caméras au standard actuel ;
- la solution permet une automatisation de la mise au point tout en laissant le choix de la fenêtre de mise au point au cadreur.

## Revendications

1. Dispositif d'assistance à la mise au point optique d'une caméra de télévision comportant un objectif à focalisation réglable par une manette de mise au point, des circuits électroniques de traitement pour l'obtention d'un signal vidéo, et un viseur pour contrôler l'image en cours de prise de vue, à partir du signal vidéo, caractérisé en ce qu'il comporte :
- un circuit d'extraction de contours (10) qui extrait du signal vidéo un signal de contours (Sc) correspondant à la dérivée seconde du signal vidéo et dont l'amplitude varie avec le défaut de mise au point de l'objectif,
- un générateur de marqueur (60), couplé au circuit d'extraction de contours pour générer, à partir du signal de contours , un signal (Sm) caractérisant l'image d'un marqueur dont la position dans le viseur varie le long d'un axe en fonction de l'amplitude du signal de contours ;
- et un circuit de combinaison (70) dont les entrées sont reliées à la sortie de signal vidéo d'une part et à la sortie du générateur de marqueur d'autre part, et dont la sortie est reliée à l'entrée de signal du viseur, pour inscrire le marqueur dans l'image de contrôle.

2. Dispositif selon la revendication 1 caractérisé en ce que, la mise au point de l'objectif étant effectuée à partir d'une zone de l'image pointée au moyen d'une commande de fenêtre (21), traduite par un générateur de fenêtre (30) en un signal de fenêtre (Sf), le générateur de fenêtre commande un circuit de fenêtrage (40) du signal de contours pour limiter ce signal à ses composantes associées à la fenêtre avant de l'appliquer au générateur de marqueur (60).

3. Dispositif selon la revendication 2, caractérisé en ce que la commande de fenêtre (21) est une commande pyramidale disposée sur une poignée (20) portant également la manette (22) de mise au point de l'objectif.

4. Caméra de télévision, caractérisée en ce qu'elle est munie d'un dispositif d'assistance à la mise au point optique selon l'une des revendications 1 à 3.

## Patentansprüche

1. Gerät zur Unterstützung der optischen Fokussierung einer Fernsehkamera, welche ein Objektiv mit einer mittels eines Fokussierungs-Handdrehknopfes einstellbaren Fokussierung, elektronische Verarbeitungsschaltkreise für die Erzeugung eines Videosignals und einen Bildsucher zum Kontrollieren des Bildes während der Aufnahme, ausgehend von dem Videosignal, umfaßt, dadurch gekennzeichnet, daß es folgendes umfaßt:
- einen Schaltkreis für die Extraktion von Konturen (10), welcher aus dem Videosignal ein Konturensignal (Sc) entnimmt, das der zweiten Ableitung des Videosignals entspricht und dessen Amplitude sich in Abhängigkeit vom Fokussierungsfehler des Objektivs ändert,
- einen Markengenerator (60), der mit dem Schaltkreis für die Extraktion von Konturen gekoppelt ist, um aus dem Konturensignal ein Signal (Sm) zu erzeugen, welches das Bild einer Marke charakterisiert, deren Position im Bildsucher sich in Abhängigkeit von der Amplitude des Konturensignals entlang einer Achse ändert;
- und einen Kombinationsschaltkreis (70), dessen Eingänge einerseits mit dem Videosignalausgang und andererseits mit dem Ausgang des Markengenerators verbunden sind, und dessen Ausgang mit dem Signaleingang des Bildsuchers verbunden ist, um die Marke in das Kontrollbild einzuschreiben.

2. Gerät nach Anspruch 1, dadurch gekennzeichnet, daß, während die Fokussierung des Objektivs ausgehend von einem Bildbereich durchgeführt wird, der mittels eines Bedienelementes für die Fensterverschiebung (21) eingestellt wird, dessen Signale durch einen Fenstergenerator (30) in ein Fenstersignal (S_{F}) umgewandelt werden, der Fenstergenerator einen Schaltkreis zur Erzeugung eines Fensters (40) aus dem Konturensignal steuert, um dieses Signal auf seine mit dem Fenster verknüpften Bestandteile einzuschränken, bevor es an den Markengenerator (60) angelegt wird.

3. Gerät nach Anspruch 2, dadurch gekennzeichnet, daß das Bedienelement für die Fensterverschiebung (21) ein pyramidenförmiges Bedienelement ist, das an einem Griff (20) angeordnet ist, welcher auch den Handdrehknopf (22) für die Fokussierung des Objektivs trägt.

4. Fernsehkamera, dadurch gekennzeichnet, daß sie mit einem Gerät zur Unterstützung der optischen Fokussierung nach einem der Ansprüche 1 bis 3 ausgestattet ist.

## Claims

1. Device for assistance in the optical focusing of a television camera including an objective lens with focusing adjustable by a focusing knob, electronic processing circuits for obtaining a video signal, and a viewfinder for monitoring the image in the course of shooting, on the basis of the video signal, characterised in that it includes:
- a contour extraction circuit (10) which extracts from the video signal a contour signal (Sc) corresponding to the second derivative of the video signal and the amplitude of which varies with the focusing error of the objective lens,
- a marker generator (60), coupled to the contour extraction circuit for generating a signal (Sm), from the contour signal, characterising the image of a marker, the position of which in the viewfinder varies along an axis as a function of the amplitude of the contour signal;
- and a combining circuit (70), the inputs of which are linked to the video signal output on the one hand and to the output of the marker generator on the other hand, and the output of which is linked to the signal input of the viewfinder, in order to inscribe the marker in the monitor image.

2. Device according to Claim 1, characterised in that, with the focusing of the objective lens being carried out on a region of the target image by means of a window control (21), converted by a window generator (30) into a window signal (Sf), the window generator controls a circuit (40) for windowing the contour signal in order to limit this signal to its components associated with the window before applying it to the marker generator (60).

3. Device according to Claim 2, characterised in that the window control (21) is a pyramidal control arranged on a handle (20) also carrying the knob (22) for focusing the objective lens.

4. Television camera, characterised in that it is equipped with a device for assistance in optical focusing according to one of Claims 1 to 3.
